# EUROPÄISCHE PATENTSCHRIFT

(11) **EP 2 703 061 B1**
(45) Veröffentlichungstag und Bekanntmachung des Hinweises auf die Patenterteilung: **29.03.2017**
(21) Anmeldenummer: 13194368.0
(22) Anmeldetag: 26.02.2009
(51) Int. Cl.: B01D 46/24, B01D 50/00, B01D 46/52, B01D 46/00

(54) **Luftfilter mit Vorabscheider**
Air filter with preliminary separator
Filtre à air avec séparateur

(30) Priorität: 26.02.2008 DE 102008011186; 23.12.2008 DE 102008062955
(43) Veröffentlichungstag der Anmeldung: 05.03.2014
(62) Teilanmeldung aus: 09716184.8
(73) Patentinhaber: MANN + HUMMEL GMBH, 71638 Ludwigsburg (DE)
(72) Erfinder: Münkel, Karlheinz, 75038 Oberderdingen-Flehingen (DE); Kolczyk, Markus, 74395 Mundelsheim (DE); Becker, Stefan, 68305 Mannheim (DE); Heim, Dr. Michael, Charlotte 28277 North Carolina (US)

(56) Entgegenhaltungen:
- EP-A- 0 558 091
- EP-A1- 1 287 896
- DE-A1-102005 031 058
- DE-U1- 29 819 335
- US-A- 4 537 608
- US-A- 5 320 653
- US-A1- 2003 182 910
- US-A1- 2007 289 265
- US-B1- 6 572 667

## Beschreibung

### Gebiet der Erfindung

Die vorliegende Erfindung betrifft einen Luftfilter mit Vorabscheider, und insbesondere einen Luftfilter mit Vorabscheider mit einer aufeinander abgestimmten Strömungsgeometrie zwischen einer Abströmgeometrie eines Vorabscheiders und einer Anströmfläche eines Filterelementes eines Hauptfilters.

Insbesondere im Bereich von Brennkraftmaschinen, die auf bzw. in Fahrzeugen zum Einsatz kommen, ist die Ausgestaltung eines effizienz- und platzoptimierten Luftfiltersystems unerlässlich, um die Abmessungen gering zu halten, und auf der anderen Seite eine dennoch hohe Effizienz der Luftfilteranordnung zu ermöglichen.

Aus der US 4 537 608 A ist ein Gasreinigungssystem mit einer Wirbelabscheideranordnung bekannt, bei welchem eine Mehrzahl von Wirbelabscheidern in Reihen angeordnet ist.

Aus der US 2003/0182910 A1 ist ein Vorabscheider mit einer Staubaustragskammer bekannt.

Aus der DE 28 18 791 A1 ist ein Wirbelrohr für Zyklonabscheider bekannt, mit einer seitlichen Austragsöffnung, sowie ein Luftreiniger, der mit Wirbelrohren ausgerüstet ist.

Aus der US 3 360 909 A ist ein Filterapparat mit mindestens einer Filterzelle und einem um diese angeordnete Staubbox bekannt.

Aus der FR 1 320 200 A ist ein zweistufiger Filter mit einem Zyklonabscheider als erste Stufe bekannt.

Aus beispielsweise EP 1 364 695 A1 ist ein Luftfilter bekannt, der in den Ansaugtrakt einer Brennkraftmaschine integriert ist, um die den Zylindern der Brennkraftmaschine zuzuführende Verbrennungsluft einer Filtration zu unterziehen. Der Luftfilter ist im Wesentlichen dreiteilig aufgebaut und umfasst in einem Filtergehäuse ein Filterelement, welches als auswechselbare Filterpatrone ausgebildet ist, die axial von der Verbrennungsluft durchströmt wird und radial über einen verschließbaren Deckel in das Filtergehäuse einsetzbar ist. Der Filterpatrone ist ein Zyk-Ion-Vorabscheider vorgeschaltet, der zur Abscheidung von groben Schmutzpartikeln dient. Stromab der Filterpatrone befindet sich ein Sekundär- bzw. Feinfilterelement, das ebenfalls radial bei geöffnetem Deckel in das Filtergehäuse einsetzbar ist. Der Zyklon-Vorabscheider, die Filterpatrone und das Feinfilterelement liegen axial hintereinander und werden ohne Umlenkung der zu reinigenden Verbrennungsluft in Achsrichtung durchströmt.

### Zusammenfassung der Erfindung

Der vorliegenden Erfindung liegt die Aufgabe zugrunde, ein Luftfilter mit einem Vorabscheider bereitzustellen, der eine optimierte Anströmgeometrie bereitstellt, um auf diese Weise die Effizienz des Luftfiltersystems zu optimieren.

Die Aufgabe der vorliegenden Erfindung wird gelöst durch den Gegenstand der unabhängigen Ansprüche, wobei weitergebildete Ausführungsformen in den abhängigen Ansprüchen verkörpert sind.

Gemäß einer beispielhaften Ausführungsform der Erfindung wird ein Luftfilter für eine Brennkraftmaschine bereitgestellt mit einem Luftfiltergehäuse, einem Vorabscheider, wobei das Luftfiltergehäuse eine Aufnahme für ein Filterelement und einen Rohgasraumbereich aufweist, wobei der Rohgasraumbereich zu dem Luftfilter begrenzt wird durch das Luftfiltergehäuse und zu einem einzusetzenden Filterelement begrenzt wird durch eine rohgasseitige Mantelfläche bzw. - anströmfläche, wobei der Vorabscheider eine Luftauslasskonfiguration aufweist, wobei die Luftauslasskonfiguration mit einer Anströmfläche eines einzusetzenden Filterelementes korrespondiert, wobei der Vorabscheider eine Zyklonenanordnung mit einer Mehrzahl von Einzelzyklonen mit jeweils einem Abströmweg aufweist, wobei die Abströmwege auf eine Anströmfläche eines einzusetzenden Filterelementes ausgerichtet verteilt ist, wobei die Aufnahme des Luftfiltergehäuses ausgelegt ist, um ein Filterelement in der Form eine Mehrfachbalgfilters mit einem außenliegenden Filterbalg und einem radial dazu innenliegenden Filterbalg aufzunehmen, wobei wenigstens ein Teil der Einzelzyklone mit ihren Abströmwegen auf eine Linie korrespondierend mit einem Anströmungskanal des einzusetzenden Filterelementes ausgerichtet sind.

Durch die unterschiedlichen Wirkungsweisen eines Zyklonenvorabscheiders und eines Filterelementes als Hauptfilter ergeben sich in einem Luftfiltergehäuse unterschiedliche Wirkungsund Arbeitsweisen der unterschiedlichen Filterstufen in einem Luftfiltergehäuse. Diese können durch den angegebenen Luftfilter dahingehend optimiert werden, dass die Abströmwege, die im Regelfall mit einer Auslassöffnung eines Einzelzyklons korrespondieren auf entsprechende Anströmflächen ausgerichtet werden, die sich bei einem Mehrfachbalgfilter in der Regel aus einem Anströmkanal ergeben, der durch beispielsweise zwei nebeneinander angeordneten Filterbälgen gebildet wird. Dabei werden die Einzelzyklone der Zyklonenanordnung derart ausgerichtet, dass deren Abströmwege bzw. deren Mündungen auf entsprechende Anströmkanäle des Filterelementes ausgerichtet sind, sodass die von den Einzelzyklonen abströmende Luft weniger oder nicht gegen eine Stirnfläche strömt, die zu einer Erhöhung des Luftwiderstandes führen würde. Auf diese Weise kann der gesamte Strömungswiderstand der Luftfilteranordnung optimiert werden, indem die Abströmwege eines Vorabscheiders korrespondierend angeordnet werden mit den Anströmwegen eines Mehrfachbalgfilters. Da ein Mehrfachbalgfilter konstruktionsbedingt im Regelfall einen ringförmigen Anströmkanal aufweist, ist es von Bedeutung, für die Optimierung des Strömungswiderstandes innerhalb der Luftfilteranordnung die Abströmwege der Einzelzyklone so auszurichten, dass diese korrespondierend mit einer ringförmigen Anströmkanalgeometrie ausgerichtet sind. Dabei können die Einzelzyklone auch auf mehrere Anströmkanäle ausgerichtet sein, die beispielsweise konzentrisch zueinander liegen. Die Anströmkanäle sind dabei nicht zwingend ringförmig, sondern können ebenfalls linien- oder flächenförmig im Querschnitt ausgestaltet sein. An dieser Stelle kann es von Bedeutung sein, dass keine oder nur eine eingeschränkte Strömungsumkehr oder Strömungsablenkung der von den Einzelzyklonen des Vorabscheiders abgegebenen Luft- bzw. Fluidströmung erfolgen muss.

Gemäß einer beispielhaften Ausführungsform der Erfindung ist das Filterelement in der Form eines Mehrfachbalgfilters mit einem außenliegenden Filterbalg und einem radial dazu innenliegenden Filterbalg ausgebildet, kann über die äußere Mantelfläche angeströmt werden und weist einen weiteren Anströmkanal auf, der im Wesentlichen durch die Rohgasseite des inneren Faltenbalges begrenzt wird.

Gemäß einer beispielhaften Ausführungsform der Erfindung verläuft der weitere Anströmkanal mittig in dem Filterelement.

Erfindungsgemäß liegen die zwei Anströmkanäle radial außen und radial innen auf der Stirnfläche des Filterelementes.

Erfindungsgemäß strömt von den Einzelzyklonen angeströmte zu reinigende Luft in den äußeren Filterkanal sowie den inneren Filterkanal ein. Dabei strömt die zu reinigende Luft über den äußeren Filterkanal über die äußere Mantelfläche des äußeren Faltenfilters in einen Reingasbereich, während die durch den inneren Anströmkanal einströmende Luft durch eine innere Mantelfläche des inneren Faltenbalges in den Reingasbereich einströmt.

Erfindungsgemäß sind die Zyklone so verteilt, dass sie zwei Anströmkanäle anströmen, einen zentralen inneren und einen äußeren.

Gemäß einer beispielhaften Ausführungsform der Erfindung befindet sich die Aufnahme und die Dichtungskonfiguration zur Abdichtung des Filterelementes gegenüber dem Luftfiltergehäuse auf einer reingasseitigen Seite des Luftfiltergehäuses bezüglich des Filterelementes.

Gemäß einer beispielhaften Ausführungsform der Erfindung sind die beiden gegenüberliegenden Seiten des inneren Faltenbalges mit einem Dichtungselement auf der Reingasseite miteinander verbunden.

Gemäß einer beispielhaften Ausführungsform der Erfindung sind der äußere Faltenbalg und der innere Faltenbalg auf der Rohgasseite mit einem Dichtungselement fehlluftdicht miteinander verbunden.

Gemäß einer beispielhaften Ausführungsform der Erfindung weist das Filterelement eine formwahrende Schale auf mit einer daran angeordneten Dichtungsgeometrie, wobei sich die Dichtungsgeometrie in der von den Einzelzyklonen abgewandten axialen Richtung des Luftfiltergehäuses befindet.

Gemäß einer beispielhaften Ausführungsform der Erfindung ist wenigstens ein Teil der Einzelzyklone mit ihren Abströmwegen tangential entlang eines Außenumfangs eines einzusetzenden Filterelementes ausgerichtet.

Eine derartige Anordnung ermöglicht eine strömungsoptimierte Anströmung eines in ein Luftfiltergehäuse eingesetzten Filterelementes, wenn dieses eine Anströmfläche aufweist, die zumindest teilweise über die äußere Mantelfläche des Filterelementes definiert ist. Dieses ist beispielsweise der Fall bei Faltenbalgfiltern, die eine Dichtungskonfiguration aufweisen, die die Trennung von Reingasseite und Rohgasseite bezüglich eines Luftfiltergehäuses auf der Abströmseite vorsieht. Dabei ist nicht ausgeschlossen, dass zusätzlich eine Anordnung von Einzelzyklonen oder auch eines anderen Vorabscheiders vorgesehen wird, der über eine Stirnseite eines Filterelementes das Filterelement anströmt.

Gemäß einer beispielhaften Ausführungsform der Erfindung wird ein Luftfilter für eine Brennkraftmaschine bereitgestellt mit einem Luftfiltergehäuse und einem Vorabscheider, wobei das Luftfiltergehäuse eine Aufnahme für ein Filterelement und einen Rohgasraumbereich aufweist, wobei der Rohgasraumbereich zu dem Luftfilter begrenzt wird durch das Luftfiltergehäuse und zu einem einzusetzenden Filterelement begrenzt wird durch eine rohgasseitige Mantelfläche bzw. Anströmfläche, wobei der Vorabscheider eine Luftauslasskonfiguration aufweist, wobei die Luftauslasskonfiguration mit einer Anströmfläche eines einzusetzenden Filterelementes korrespondiert, wobei der Vorabscheider eine Zyklonenanordnung mit einer Mehrzahl von Einzelzyk-Ionen mit jeweils einem Abströmweg aufweist, wobei die Abströmwege auf eine Anströmfläche eines einzusetzenden Filterelementes ausgerichtet verteilt ist, wobei wenigstens ein Teil der Einzelzyklone mit ihren Abströmwegen tangential entlang eines Außenumfangs eines einzusetzenden Filterelementes ausgerichtet sind.

Auf diese Weise wird ungeachtet dessen, ob ein weiterer Vorabscheider bzw. weitere Einzelzyklone vorgesehen sind, die über eine axiale Richtung ein Filterelement anströmen, eine optimierte Anströmungsgeometrie für eine Anströmung über eine Mantelfläche bereitgestellt. Insbesondere wenn ein Filterelement vorgesehen ist, dass ausschließlich über eine äußere Mantelfläche angeströmt wird, kann ein Vorabscheider bzw. Einzelzyklone entbehrlich sein, die über eine Stirnfläche das Filterelement anströmen. Vielmehr kann der Strömungswiderstand der gesamten Luftfilteranordnung für derartige Filterelemente optimiert werden, indem die Einzelzyklone mit ihren Abströmwegen tangential entlang eines Außenumfangs des einzusetzenden Filterelementes ausgerichtet sind. Eine tangentiale Ausrichtung ermöglicht dabei, dass die einströmende Luft bzw. das einströmende Fluid über eine größere Umfangsfläche bzw. einen größeren Umfangsweg verteilt wird, über den sich auch die Anströmfläche bzw. die Mantelfläche eines Filterelementes erstreckt.

Gemäß einer beispielhaften Ausführungsform der Erfindung sind die Einzelzyklone in einer Reihe in Richtung einer axialen Ausdehnungsrichtung eines einzusetzenden Filterelementes angeordnet.

Bei einer Anordnung der Einzelzyklone in einer Linie können die Anströmwege optimiert ausgestaltet werden, sodass eine aufwendige Heranführung einer zu filternden Luft bzw. eines zu filternden Fluides entbehrlich ist. Die Einzelzyklone können dabei nicht nur in einer Linie ausgerichtet sein, um beispielsweise die Baubreite eines Luftfiltergehäuses bzw. einer Luftfilteranordnung schmal auszugestalten, sondern auch entlang eines Umfangs eines einzusetzenden Filterelementes ausgerichtet sein, wenn dies funktional von Vorteil ist.

Gemäß einer beispielhaften Ausführungsform der Erfindung weist das Luftfiltergehäuse einen zu einer radialen Mantelfläche eines einzusetzenden Filterelementes in Umfangsrichtung abnehmenden Abstand auf.

Auf diese Weise kann dem Rechnung getragen werden, dass eine tangential herangeführte zu filterende Luft bzw. ein Fluid sich zirkular um den äußeren Umfang eines Filterelementes herumbewegt und dabei entlang des Umfangs Teile des zu filternden Fluides durch die Filterfläche des Luftfilters treten, sodass die gesamte Menge des noch zu filternden Fluides entlang des Umfanges abnimmt. Auf diese Weise kann zudem bei einer entlang des Umfangs abnehmenden Fluidmenge und bei einer korrespondierend dazu abnehmenden Abstand der Druck des Fluides auf der Anströmseite des Filterelementes im Wesentlichen konstanter gehalten werden, sodass die Filtereffizienz des Filterelementes über den Umfang gleichmäßiger ausgestaltet werden kann, bzw. im Optimalfall konstant ist.

Gemäß einer beispielhaften Ausführungsform der Erfindung weist das Luftfiltergehäuse eine Stufe auf, die einen Bereich eines radial nach außen geringen Abstandes zu einem einzusetzenden Filterelement mit einem Bereich eines radial nach außen großen Abstandes zu einem einzusetzenden Filterelement verbindet.

Auf diese Weise kann in der Stufe die Luftauslasskonfiguration vorgesehen werden. Insbesondere kann durch eine derartige Anordnung die gesamte Bauform und damit das Bauvolumen eines Luftfiltergehäuses kompakter ausgestaltet werden. Die Stufe kann dabei bezüglich der umlaufenden Fläche rechtwinklig ausgestaltet sein, jedoch auch je nach Gegebenheiten geneigt sein. Die Fläche der Stufe erstreckt sich dabei beispielsweise radial von dem einzusetzenden Filterelement weg. Dabei kann die Stufe insbesondere bei ovalen einzusetzenden Filterelementen und Luftfiltergehäusen, die für einen Einsatz eines ovalen Filterelementes vorgesehen sind, im Bereich der weniger gekrümmten Bereiche des Ovals vorgesehen sein.

Gemäß einer beispielhaften Ausführungsform der Erfindung sind in der Stufe eine Mündung bzw. Mündungen einer Luftauslasskonfiguration vorgesehen, wobei die Abströmwege der Einzelzyklone in einer im Wesentlichen tangentialen Richtung ausgerichtet sind.

Auf diese Weise kann die Stufe als Aufnahme verwendet werden, um die Mündungen der Einzelzyklonen anzuordnen, um einen von den Einzelzyklonen abströmenden Fluidstrom über weite Wege um nahezu den gesamten Umfang eines einzusetzenden Filterelementes herum führen zu können, ohne dass der Luftstrom über Gebühr durch beispielsweise Falten eines Faltenfilters in Umfangsrichtung abgebremst wird.

Gemäß einer beispielhaften Ausführungsform der Erfindung ist in der Stufe eine Mündung von mindestens einem Einzelzyklon vorgesehen, mit einem Abströmweg in einer im Wesentlichen tangentialen Richtung.

Auf diese Weise kann insbesondere bei einem Einsatz von mehreren Einzelzyklonen eine verhältnismäßig kompakte Einströmgeometrie in ein Luftfiltergehäuse bereitgestellt werden, die aufgrund mehrerer Einzelzyklone, die beispielsweise entlang einer Linie parallel zu einer axiale Ausdehnungsrichtung eines einzusetzenden Filterelementes eine Ringströmung über eine verhältnismäßig große Breite bereitstellen.

Gemäß einer beispielhaften Ausführungsform der Erfindung weist der Luftfilter ein Filterelement in Form eines Mehrfachbalgfilters auf mit einem außenliegenden Filterbalg und einem radial dazu innenliegenden Filterbalg, wobei die Faltentiefe des außenliegenden Filterbalges kleiner ist als die Faltentiefe eines dazu benachbart radial innenliegenden Filterbalges.

Auf diese Weise kann der Anströmkanal insbesondere bei einer Anströmung in einen Ringspalt zwischen zwei Filterbälgen verhältnismäßig weit radial nach außen angeordnet werden, sodass der Anströmkanal dadurch eine größere effektive Querschnittsfläche aufweisen kann, als ein Anströmkanal, der radial weiter innen liegt. Dies ergibt sich aus dem größeren Umfang des Ringspaltes, wenn dieser radial weiter außen angeordnet werden kann. Ferner kann durch das Bereitstellen einer größeren Faltentiefe bei einem radial innen liegenden Faltenbalg die Flächenbelastung des inneren Faltenbalges und des äußeren Faltenbalges aneinander angenähert werden, sodass eine gleichmäßigere Filterflächenbelastung auftritt.

Gemäß einer beispielhaften Ausführungsform der Erfindung weist ein Einzelzyklon einen Zyklonenkanal auf, an dessen Einlassende eine Leitblechanordnung vorgesehen ist, die ausgelegt ist, um eine einströmende Luft bzw. ein Fluid in eine Drehbewegung um eine Erstreckungsachse des Zyklonenkanals zu versetzen, und wobei an dessen Auslassende eine konzentrische Auslassanordnung vorgesehen ist mit einem innenliegenden Reinluftauslass und einem außen liegenden Filterpartikelauslass.

Auf diese Weise wird ermöglicht, mit einer verhältnismäßig kompakten Bauform einen Einzelzyklon bereitzustellen, bei dem zu reinigende Luft bzw. zu reinigendes Fluid derart in eine Rotationsbewegung innerhalb des Zyklonenkanals versetzt wird, dass sich herauszufilternde Partikel aufgrund des Fliehkraft an die Außenwand des Zyklonenkanals bewegen und bei einer fortschreitenden Strömung entlang der axialen Ausdehnungsrichtung des Zyklonenkanals zwischen einen Ringschlitz gedrückt werden, der außerhalb des innenliegenden Reinluftauslasses liegt und einen außen liegenden Filterpartikelauslass darstellt. Die von den schweren Filterpartikeln gereinigte Luft bzw. Fluid gelangt dann durch den innenliegenden Reinluftauslass in den Abströmbereich des Einzelzyklons, der auf eine Anströmfläche eines Filterelementes ausgerichtet ist.

Gemäß einer beispielhaften Ausführungsform der Erfindung befindet sich in Umfangsrichtung zwischen einer Außenwand des Luftfiltergehäuses und einer Anströmfläche eines einzusetzenden Filterelementes eine Fluidleitblechanordnung. Mit einer derartigen Leitblechanordnung kann eine optimierte Strömungsgeometrie innerhalb des Luftfiltergehäuses bereitgestellt werden, sodass insbesondere feinere Nuancen im Strömungsweg eingestellt werden können, ohne dass die gesamte Geometrie eines Luftfiltergehäuses modifiziert werden muss.

Es sei verstanden, dass auch eine Kombination der zuvor beschriebenen Merkmale möglich ist, wodurch sich zum Teil eine synergetische Wechselwirkung einstellen kann, die über die Summe der Einzelwirkungen der genannten Merkmale hinausgeht.

Im Folgenden werden nun beispielhafte Ausführungsformen der Erfindung anhand der beigefügten Zeichnungen beschrieben und erläutert.

### Kurze Beschreibung der Zeichnungen

Figur 1 zeigt eine beispielhafte, zum Verständnis der Erfindung hilfreiche Ausführungsform eines Luftfilters mit einem Vorabscheider und einem eingebauten Faltenfilterelement.
Figur 2 zeigt eine erfindungsgemäße Ausführungsform eines Luftfilters mit einem eingebauten Faltenfilterelement.
Figur 3 zeigt eine erfindungsgemäße Ausführungsform eines Luftfilters mit tangential angeordneten Zyklonen.
Figur 4 zeigt eine zum Verständnis der Erfindung hilfreiche radiale Schnittansicht eines Luftfilters mit einem tangential anströmenden Zyklon.
Figur 5 zeigt eine erfindungsgemäße Aufsicht eines Filterelementes von einer Seite mit zwei An- bzw. Abströmkanälen.
Figur 6 zeigt eine zum Verständnis der Erfindung hilfreiche Aufsicht eines Filterelementes mit einem An- bzw. Abströmkanal.
Figur 7 zeigt eine zum Verständnis der Erfindung hilfreiche Aufsicht auf eine Vorabscheidergeometrie mit einem Filterelement von einer Seite mit einem Anströmkanal.
Figur 8 zeigt eine Aufsicht auf eine erfindungsgemäße Vorabscheidergeometrie mit einem Filterelement von einer Seite mit zwei Anströmkanälen.
Figur 9 zeigt ein Mehrfachfaltenfilterelement gemäß einer zum Verständnis der Erfindung hilfreichen Ausführungsform der Erfindung.
Figur 10 zeigt, zum Verständnis der Erfindung hilfreich, eine in Figur 7 gezeigte Vorabscheidergeometrie mit geneigt angestellten Zyklonen.

Die im Folgenden beschriebenen Ausführungsformen sind keinesfalls beschränkend aufzufassen und zeigen zweckmäßige, jedoch nicht ausschließliche Ausführungsformen der Erfindung.

### Detailierte Beschreibung beispeilhafter Ausführungsformen der Erfindung

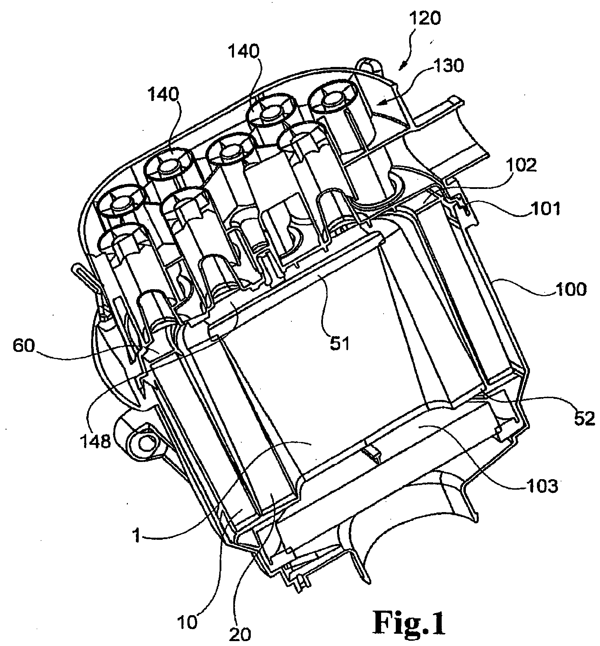

Figur 1 zeigt eine beispielhafte Ausführungsform eines Luftfilters 100 sowie einem Vorabscheider 120. Der Vorabscheider weist eine Zyklonenanordnung 130 auf, die in der hier gezeigten Ausführungsform eine Mehrzahl von Einzelzyklonen 140 aufweist. Die Einzelzyklone weisen jeweils eine Abströmrichtung 148 auf. Die Abströmrichtung der Zyklone 140 ist hier in einen Rohgasraum 102 eines Luftfiltergehäuses gerichtet. In das Luftfiltergehäuse 100 ist ein Filterelement 1 eingesetzt, das hier in Form eines Mehrfachfaltenbalgfilters ausgestaltet ist. Die vorabgeschiedenen Partikel können über den Staubaustragstutzen 129 ohne zusätzliche Absaugung ausgetragen werden, etwa durch Selbstaustragung mittels Schwerkraft, Motorpulsationen, etc. Dieser einfachere, kostensparende Aufbau kann einen größeren Zyklonzellendurchmesser bedingen, der jedoch nicht so leicht verstopft.

Das hier gezeigte Filterelement weist einen äußeren Faltenbalg 10 sowie einen inneren Faltenbalg 20 auf. Bedingt durch die in Figur 1 gezeigte Einbaurichtung mit einer Dichtungsanordnung im Bereich einer Aufnahme 101 des Luftfiltergehäuses für eine Filterelement 1 auf einer der Rohgasseite zugewandten Seite des Luftfiltergehäuses ergibt sich durch die Ausgestaltung des Filterelementes 1 mit den beiden Faltenbälgen 10, 20 ein Anströmkanal zwischen den beiden Faltenbälgen 10 und 20. Das Filterelement 1 ist in der hier gezeigten Ausführungsform mit einer formwahrenden Schale 60 versehen, an der hier auch die Dichtungskonfiguration des Filterelementes 1 vorgesehen ist, mit der das Filterelement 1 in die Aufnahme 101 des Luftfiltergehäuses 100 eingesetzt wird. In der in Figur 1 gezeigten Ausführungsform sind zwei gegenüberliegende Seiten des inneren Faltenbalges 20 mittels eines Dichtungsleementes 51 verbunden, sodass die Rohgasseite 102 und die Reingasseite 103 bezüglich des Filterelementes 1 voneinander fehlluftdicht getrennt sind. Da der in Figur 1 gezeigte Luftfilter eine Konfiguration aufweist, bei der die Aufnahme 101 axial in Richtung des Vorabscheiders angeordnet ist, ergibt sich bei einer korrespondierenden Ausgestaltung eines hier gezeigten Zweibalgfaltenfilters ein einziger Anströmkanal, der in Form eines Ringspaltes umlaufend auf der rohgasseitigen Anströmfläche des Filterelementes vorgesehen ist. Die Einzelzyklone 140 sind hier auf die Anordnung des Ringspaltes des Anströmkanals ausgerichtet, sodass die Abströmungswege 148 mit dem Ringspalt des Anströmkanales korrespondieren. Auf der Abströmseite des Filterelementes sind der erste Faltenbalg 10 und der erste Faltenbalg 20 mit einem zweiten Dichtungselement 52 dichtend verbunden, sodass auch an dieser Seite eine fehlluftdichte Trennung von Reingasseite und Rohgasseite bzgl. des Filterelementes 1 sichergestellt ist.

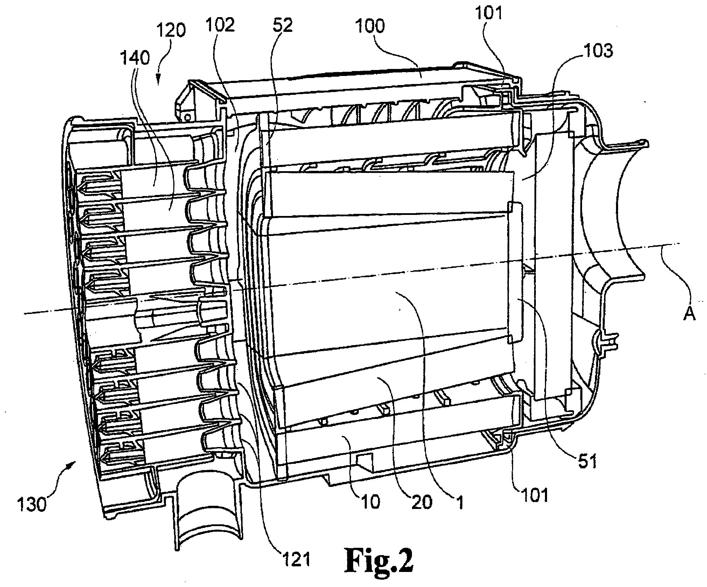

Figur 2 zeigt eine alternative Ausführungsform eines Luftfilters mit einem Vorabscheider 120, der an einem Luftfiltergehäuse 100 angeordnet ist. Auch hier weist der Vorabscheider 120 eine Zyklonenanordnung 130 auf, die eine Mehrzahl von Einzelzyklonen 140 aufweist. Gegenüber der in Figur 1 gezeigten Anordnung weist der in Figur 2 gezeigte Vorabscheider 120 eine größere Anzahl von Einzelzyklonen auf. Die Luftauslasskonfiguration 121 des Vorabscheiders bzw. der Zyklonenanordnung ist auch hier auf die Anströmgeometrie eines Filterelementes 1 optimiert angeordnet. Die vorabgeschiedenen Partikel können auch über den Staubaustragstutzen 129 mittels externer Absaugung ausgetragen werden, etwa durch einen Abgasejektor oder andere Unterdruckquelle wie Kühlergebläse. Dazu bedarf es einer zusätzlichen Leitung. Gleichzeitig kann der Zyklonzellendurchmesser verkleinert werden, was Prinzip bedingt einen höheren Abscheidegrad bringt.

Im Gegensatz zu Figur 1 ist das Filterelement 1 in eine Richtung eingebaut, bei der die Aufnahme 101 für ein Filterelement 1 für ein Luftfiltergehäuse 100 auf einer vom Vorabscheider 120 abgewandten Seite des Luftfiltergehäuses 100 angeordnet ist. Damit befindet sich die Aufnahme und damit auch die Dichtungskonfiguration zur Abdichtung des Filterelementes gegenüber dem Luftfiltergehäuse 100 auf einer reingasseitigen Seite des Luftfiltergehäuses bzgl. des Filterelementes 1. Auf diese Weise vergrößert sich der Rohgasbereich 102, da der in Figur 2 gezeigte Luftfilter nun ein Filterelement aufweist, das über zwei Anströmkanäle angeströmt werden kann. Das in Figur 2 gezeigte Filterelement 1 kann über die äußere Mantelfläche angeströmt werden, da sich der Rohgasraum 102 auch seitlich an dem Filterelement 1 vorbei erstreckt bis zu der Dichtungslinie, die im Bereich der Aufnahme 101 verläuft. Darüber hinaus weist das in Figur 2 als Zweibalgfilter ausgeführte Filterelement 1 einen weiteren Anströmkanal auf, der in Wesentlichen durch die Rohgasseite des inneren Faltenbalges 20 begrenzt wird und hier mittig in dem Filterelement 1 verläuft. Wie mit Bezugnahme auf Figur 1 bereits erläutert, sind die beiden gegenüberliegenden Seiten des inneren Faltenbalges 20 mit einem Dichtungselement 51 hier auf der Reingasseite miteinander verbunden, während der äußere Faltenbalg 10 und der innere Faltenbalg 20 auf der Rohgasseite mit dem Dichtungselement 52 fehlluftdicht miteinander verbunden sind.

Aufgrund der Tatsache, dass in der in Figur 2 gezeigten Konfiguration nun zwei Anströmkanäle bereitgestellt werden, können die Einzelzyklone jeweils auf die entsprechenden Anströmkanäle ausgerichtet sein. Da die Anströmkanäle einmal radial außen und einmal radial innen auf der Stirnfläche des Filterelementes 1 liegen, können die Einzelzyklone 140 zum einen etwas kleiner ausgeführt werden als in der in Figur 1 gezeigten Ausführungsform, jedoch dafür die gesamte Ringspaltlänge beider Anströmkanäle überdecken, die in der in Figur 2 gezeigten Ausführungsform wesentlich länger ist als die des einzigen Ringspaltes der Figur 1.

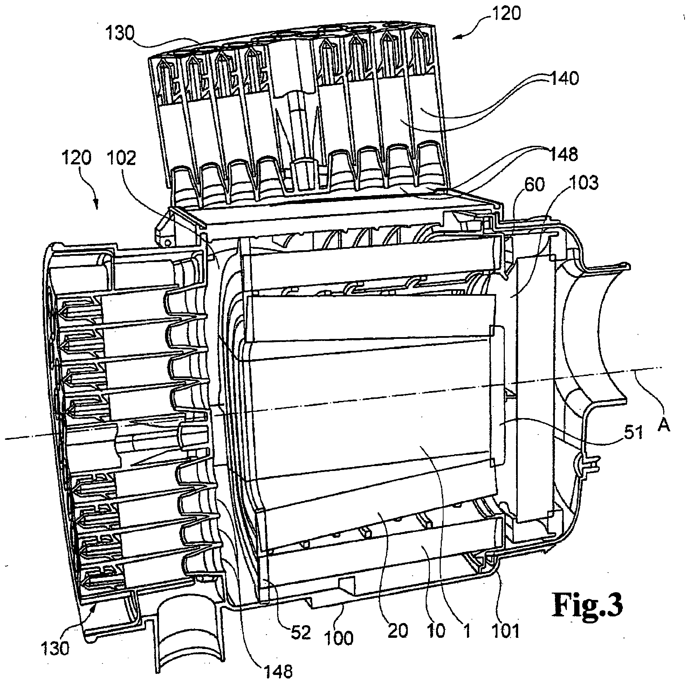

Figur 3 zeigt eine weitere beispielhafte Ausführungsform der Erfindung, in der neben einem in einer axialen Ausdehnungsrichtung A des Luftfilters angeordneten Vorabscheiders 120 ein weiterer Vorabscheider 120 seitlich angeordnet ist, der prinzipiell einen ähnlichen oder gleichen Aufbau aufweisen kann, wie der auf der axialen Ausdehnungsrichtung angeordnete Vorabscheider. Auch der zweite radial angeordnete Vorabscheider 120 weist eine Zyklonenanordnung 130 mit einer Mehrzahl von Einzelzyklonen 140 auf, die jeweils wiederum einen Abströmweg 148 aufweisen. Es sei verstanden, dass eine derartige radial angeordnete Vorabscheideranordnung auch ohne eine axial angeordnete Vorabscheideranordnung vorgesehen sein kann, sodass ausschließlich ein radial angeordneter Vorabscheider mit Einzelzyklonen 140 vorgesehen ist. Die in Figur 3 gezeigte Ausführungsform zeigt einen Luftfilter mit einem Luftfiltergehäuse 100 mit einem Zweifachfaltenbalgfilter als Filterelement 1, bei dem die Abdichtung des Rohgasraumes 102 zu dem Reingasraum 103 an einer Dichtungsnaht im Bereich der Aufnahme 101 seitens der Reingasseite 103 angeordnet ist. Auf diese Weise ergibt sich für das Filterelement 1 in dem Luftfiltergehäuse 100 wieder eine analog zu Figur 2 zweikanalige Anströmgeometrie, bei der ein Anströmkanal zentrisch angeordnet ist sowie ein weiterer Anströmkanal radial außen angeordnet ist, sodass über den radial außen angeordneten Anströmkanal eine Anströmung über die äußere Mantelfläche des äußeren Filterbalges 10 erfolgen kann. Auf diese Weise kann die innere Mantelfläche des durch den inneren Filterbalg 20 gebildeten innere Anströmkanals durch den axial angeordneten Vorabscheider mit den daran angeordneten Einzelzyklonen angeströmt werden, während der radial außenliegende Anströmkanal über die äußere Mantelfläche des äußeren Faltenbalges 10 durch den radial angeordneten Vorabscheider 120 mit den daran befindlichen Einzelzyklonen 140 angeströmt wird. Auf diese Weise kann eine gezielte Anströmung der Mantelflächen erreicht werden, um so eine optimale Strömungsgeometrie innerhalb eines Luftfiltergehäuses bereitstellen zu können.

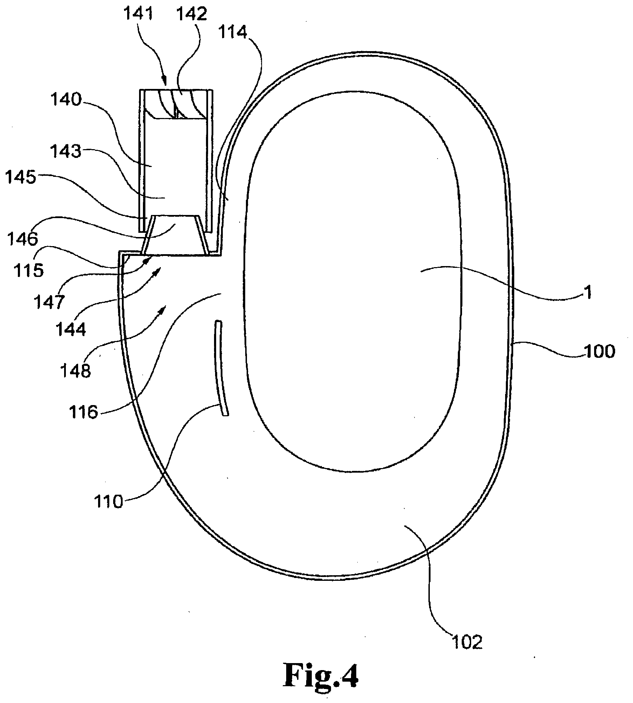

Figur 4 zeigt eine Schnittansicht in einer radialen Ausdehnungsrichtung eines Filterelementes 1 bzw. eines Luftfiltergehäuses 100. In dieser Anordnung ist die radiale Anordnung eines Einzelzyklons 140 zu sehen, der in der hier gezeigten Ausführungsform mit seinem Abströmweg 148 in eine tangentiale Richtung bzgl. Der Mantelfläche des Filterelementes 1 ausgerichtet ist. Der Einzelzyklon 140 weist dabei einen Zyklonkanal 143 mit einer Einlassseite 141 und einer Auslassseite 144 auf. Die Einlassseite 141 weist dabei eine Luftleitblechanordnung 142 auf, die so angeordnet ist, dass eine einströmende Luft- bzw. ein einströmendes Fluid derart in eine Rotation um eine Längsachse des Zyklonkanals 143 verbracht wird, dass darin befindliche Staubpartikel fliehkraftbedingt an die äußere Wand des Zyklonkanals 143 geschleudert werden, und bei einer überlagerten Strömung von der Eingangsseite 141 in Richtung der Ausgangsseite 144 in den Zwischenraum 145 zwischen dem Zyklonkanalgehäuse und dem Auslasstrichter fallen bzw. gedrückt werden. Auf diese Weise kann fliehkraftbedingt das zu reinigende Fluid bzw. die zu reinigende Luft von schweren Staubpartikeln gereinigt werden, während die von den Staubpartikeln gereinigte Luft aus der Reinluftauslassöffnung 148 in den Rohgasraum 102 des Luftfiltergehäuses 100 eintritt. Das Luftfiltergehäuse weist in der in Figur 4 gezeigten Ausführungsform einen Bereich auf, der nur einen geringen Abstand zu dem einzusetzenden Luftfilter 1 aufweist, der in Figur 4 mit 114 gekennzeichnet ist. Darüberhinaus weist das Luftfiltergehäuse 100 auch einen Bereich 116 auf, der einen relativ breiten Abstand des Luftfiltergehäuses zu dem einzusetzenden Luftfilterelement 1 aufweist. Diese beiden Bereiche 114 und 116 sind durch eine Stufe 115 voneinander getrennt, wobei sich diese Stufe in der in Figur 4 gezeigten Ausführungsform in radiale Richtung erstreckt. In dieser Stufe kann beispielsweise die Mündung des Einzelzyklons vorgesehen sein, insbesondere wenn dieser in eine tangentiale Richtung in den Innenraum bzw. den Rohgasraum 102 des Luftfiltergehäuses 1 einbläst. Auf diese Weise wird das einströmende Fluid bzw. die einströmende Luft in eine tangentiale Drehung um das Filterelement 1 versetzt, sodass nicht nur der in unmittelbarer Nähe des Zyklonauslasses befindliche Mantelbereich des Filterelementes 1 angeströmt wird, sondern auch in Umfangsrichtung weiter entfernt liegende Bereiche des Filterelementes 1. Da betriebsbedingt das zu reinigende Fluid bzw. die zu reinigende Luft durch die Filterfläche des Filterelementes 1 tritt, wird die Menge des zu reinigenden Fluides in Umlaufende Richtung weniger, da diese sukzessiv durch die Filterfläche von dem Rohgasraum 102 in den hier nicht gezeigten Reingasraum übertritt. Durch eine sich verjüngende Ausgestaltung des Zwischenraumes zwischen dem Luftfiltergehäuse 100 und dem Filterelement 1 kann jedoch der anstehende Druck des zu reinigenden Fluides bzw. der zu reinigenden Luft im Wesentlichen über die gesamte Umfangslänge des Filterelementes 1 konstant gehalten werden. Um insbesondere Turbulenzen im Bereich der Einströmmündung an der Stufe 15 zu vermeiden, können beispielsweise Luftleitbleche 110 oder andere strömungsleitende und optimierende Vorrichtungen vorgesehen sein. Statt des Einzelzyklons kann auch ein einfacher Stutzen vorgesehen sein, der einen Lufteinlass mit einer tangentialen Anströmung hervorruft. Durch eine tangentiale Anströmung und eine zirkulare Führung der Strömung um das Filterelement 1 kann im Gehäuse 100 eine Vorabscheidung erreicht werden. In diesem Fall kann ein Staubaustrag im Gehäuse integriert werden, um die abgeschiedenen Partikel aus dem Gehäuse abzuführen.

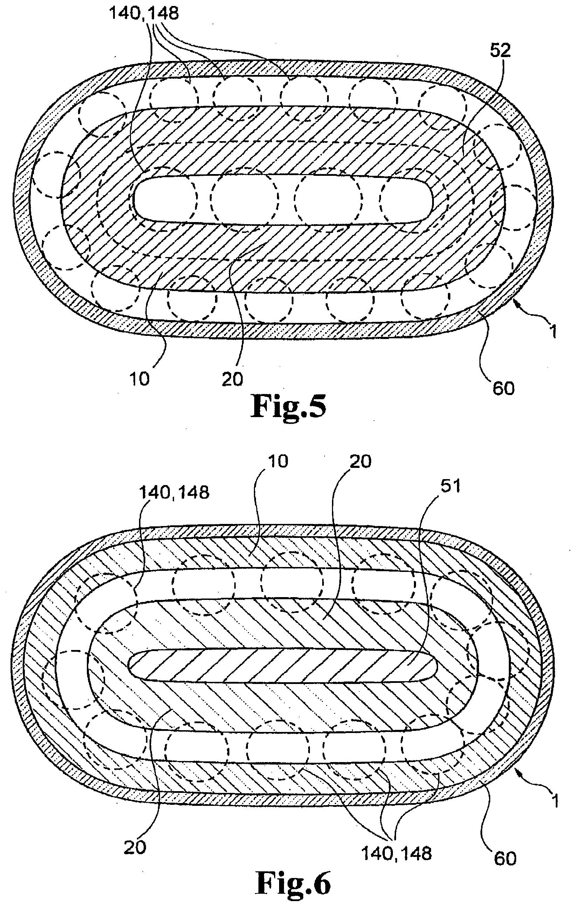

Figur 5 zeigt eine schematische Ansicht eines Faltenfilterelementes, mit einer schematischen Anordnung von Einzelzyklonabströmwegen 148. Figur 5 zeigt dabei eine Ausführungsform bei der das Filterelement zwei Anströmkanäle aufweist, analog der in Figur 2 und 3 beschriebenen Ausführungsformen. Die formwahrende Schale 60 mit einer daran angeordneten Dichtungsgeometrie befindet sich in der von den Einzelzyklonen 140 abgewandten axialen Richtung des - Luftfiltergehäuses. In der in Figur 5 gezeigten Ausführungsform sind der äußere Faltenbalg 10 und der innere Faltenbalg 20 durch das zweite Dichtungselement 52 fehlluftdicht miteinander verbunden, sodass von den Einzelzyklonen angeströmte zu reinigende Luft in den äußeren Filterkanal sowie den inneren Filterkanal einströmt. Über den äußeren Filterkanal strömt die zu reinigende Luft über die äußere Mantelfläche des äußeren Faltenfilters in einen hier nicht gezeigten Reingasbereich, während die durch den inneren Anströmkanal einströmende Luft durch eine innere Mantelfläche des inneren Faltenbalges in den Reingasbereich einströmt.

Figur 6 zeigt eine Anordnung eines Filterelementes, das im Wesentlichen mit dem in Figur 5 gezeigten Filterelement übereinstimmen kann, wobei jedoch dieses Filterelement dann von der axial gegenüberliegenden Seite betrachtet wird. In diesem Fall wird der Anströmkanal durch die innere Mantelfläche des äußeren Filterelementes 10 und die äußere Mantelfläche des inneren Filterelementes 20 gebildet. Der dadurch entstehende Ringkanal wird durch die Abströmwege 148 der Einzelzyklone 140 angeströmt. Dabei sind die gegenüberliegenden inneren Mantelflächen des inneren Faltenfilters 20 mit einem ersten Dichtungselement 51 fehlluftdicht abgedichtet. Eine formwahrende Schale 60 ist in der in Figur 6 gezeigten Aufsicht relativ schmal ausgeführt, sodass auch die Stirnflächen sowohl des äußeren Faltenbalges 10 als auch des inneren Faltenbalges 20 für eine Anströmfläche zur Verfügung stehen. Dabei versteht es sich, dass die jeweils reingasseitigen Faltenseiten, die beim inneren Filterfaltenbalg 20 innen liegen bzw. die beim äußeren Filterfaltenbalg 10 außen liegen jeweils fehlluftdicht dem ersten Dichtungselement 51 bzw. der dichtenden formwahrenden Schale 60 verbunden sind, sodass wiederum eine zuverlässige Trennung zwischen Reingasseite und Rohgasseite gewährleistet ist.

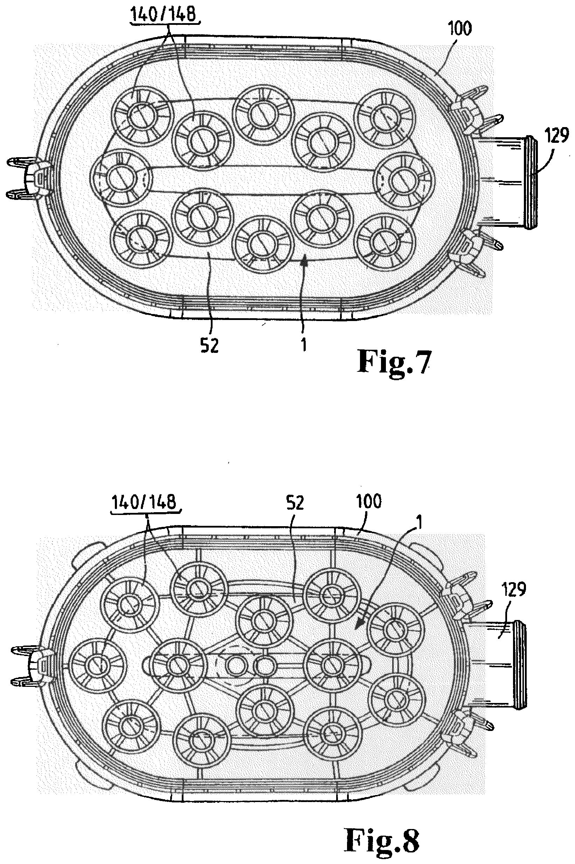

Figur 7 zeigt eine Aufsicht auf eine Vorabscheidergeometrie mit einem Filterelement von einer Seite mit einem Anströmkanal. Die Zyklone 140 sind entlang der Öffnung des Anströmkanales verteilt. Dabei folgen die Zyklone nicht direkt der Umfangskontur des einzusetzenden Filterelementes 1, ondern sind in der hier gezeigten Ausführungsform leicht versetzt. Auf diese Weise kann eine Optimierung hinsichtlich sowohl des Anströmverhaltens als auch der geometrischen Anordnung bezüglich des Platzbedarfes für die Zyklone erreicht werden. Seitlich ist ein Staubauslass 129 vorgesehen, über den in den Zyklonen 140 abgeschiedene Partikel entweder durch Schwerkraft oder durch eine externe Absaugung abgeführt werden können.

Figur 8 zeigt eine Aufsicht auf eine Vorabscheidergeometrie mit einem Filterelement von einer Seite mit zwei Anströmkanälen. Die hier gezeigten Zyklone 140 haben einen etwas kleineren Durchmesser als die in Figur 7 gezeigten Zyklone. Jedoch sind diese Zyklone so verteilt, dass sie zwei Anströmkanäle anströmen, einen zentralen innen und einen äußeren. Auch hier ist eine Optimierung hinsichtlich der Anströmung und der geometrischen Anordnung vorherrschend, sodass unter beiden Gesichtspunkten eine optimierte Anordnung bereitgestellt werden kann.

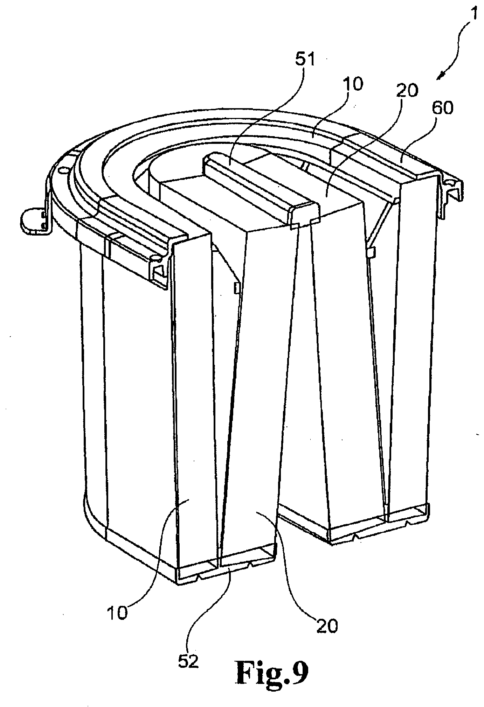

Figur 9 zeigt eine dreidimensionale schematische Ansicht eines Zweibalgfaltenfilterelementes, bei dem die hier von schräg oben sichtbare Seite mit der Aufsicht des in Figur 6 gezeigten Faltenfilters korrespondiert, während die hier verdeckte untere Seite mit der in Figur 5 gezeigten Aufsicht des Filterelementes 1 korrespondiert. In Figur 9 ist der schematische Aufbau des Faltenfilterelementes etwas deutlicher sichtbar aufgrund der räumlichen Darstellung des Filterelementes. Die formwahrende Schale 60 ist hier mit einer Dichtungsanordnung versehen, die in einer hier nicht gezeigten Aufnahme eines Luftfiltergehäuses eingreifen kann. Die formwahrende Schale 60 erstreckt sich dabei in der hier gezeigten Ausführungsform nur teilweise über die Faltentiefe des äußeren Faltenbalges 10, um auf diese Weise die Anströmfläche des äußeren Faltenbalges insbesondere der innen Mantelfläche des äußeren Faltenbalges 10 zu verbessern, sofern von dieser Seite eine Anströmung erfolgt.

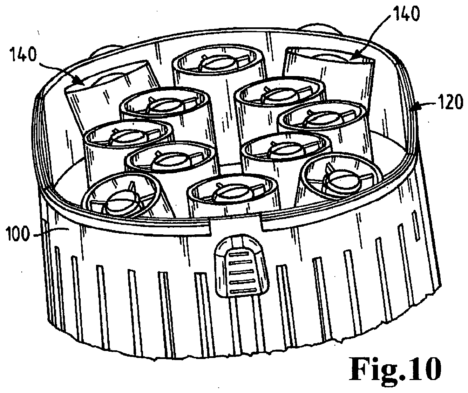

Figur 10 zeigt eine in Figur 7 gezeigte Vorabscheidergeometrie mit geneigt angestellten Zyklonen. Die Zyklone sind mit ihren Auslässen bzw. Abströmgeometrien auf die Anströmkanäle ausgerichtet. Dies kann nicht nur durch eine entsprechende Verteilung entlang des Umfangs erfolgen, sondern auch durch eine Ausrichtung der Zyklonauslässe. Dabei können sowohl die gesamten Zyklone als auch nur deren Auslässe geneigt sein.

Es sei angemerkt, dass der Begriff "umfassen" weitere Elemente nicht ausschließt, ebenso wie der Begriff " ein" und " eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Luftfilter für eine Brennkraftmaschine mit
einem Luftfiltergehäuse (100) mit einem Rohgasraum (102),
einem Vorabscheider (120) aufweisend eine Zyklonanordnung (130) mit einer Mehrzahl von Einzelzyklonen (140) mit jeweils einem Abströmweg (148), wobei die Abströmrichtung der Einzelzyklone (140) in den Rohgasraum (102) des Luftfiltergehäuses gerichtet sind,
einem in das Luftfiltergehäuse eingesetzten Filterelement mit einem radial äußeren und einem radial inneren Anströmkanal, wobei das Filterelement in der Form eines Mehrfachbalgfilters mit einem außenliegenden Filterbalg und einem radial dazu innenliegenden Filterbalg ausgebildet ist und über den äußeren Anströmkanal über die äußere Mantelfläche angeströmt werden kann und der innere Anströmkanal im Wesentlichen durch die Rohgasseite des inneren Faltenbalges (20) begrenzt wird, wobei die durch den inneren Anströmkanal einströmende Luft durch die innere Mantelfläche des inneren Faltenbalges strömt,
wobei das Luftfiltergehäuse (100) eine Aufnahme (101) für das Filterelement und einen durch das Luftfiltergehäuse (100) und eine rohgasseitige Mantelfläche bzw. Anströmfläche des eingesetzten Filterelementes begrenzten Rohgasraumbereich aufweist,
wobei die Aufnahme (101) des Luftfiltergehäuses (100) ausgelegt ist, um das Filterelement aufzunehmen,
wobei der Vorabscheider (120) eine Luftauslasskonfiguration (121) aufweist, wobei die Luftauslasskonfiguration mit einer Anströmfläche des einzusetzenden Filterelementes derart korrespondiert, dass die Abströmwege (148) des Vorabscheiders (120) auf eine Anströmfläche des eingesetzten Filterelementes so ausgerichtet verteilt sind,
dass wenigstens ein Teil der Einzelzyklone (140) jeweils mit ihren Abströmwegen (148) auf den inneren Anströmkanal und ein Teil der Einzelzyklone (140) jeweils mit ihren Abströmwegen (148) auf den äußeren Anströmkanal ausgerichtet sind.

2. Luftfilter nach Anspruch 1, wobei der innere Anströmkanal mittig in dem Filterelement (1) verläuft.

3. Luftfilter nach einem der vorhergehenden Ansprüche, wobei die zwei Anströmkanäle radial außen und radial innen auf der Stirnfläche des Filterelementes (1) liegen.

4. Luftfilter nach einem der vorhergehenden Ansprüche, wobei sich die Aufnahme und die Dichtungskonfiguration zur Abdichtung des Filterelementes gegenüber dem Luftfiltergehäuse (100) auf einer reingasseitigen Seite des Luftfiltergehäuses bezüglich des Filterelementes (1) befindet.

5. Luftfilter nach einem der vorhergehenden Ansprüche, wobei die beiden gegenüberliegenden Seiten des inneren Faltenbalges (20) mit einem Dichtungselement (51) auf der Reingasseite miteinander verbunden sind.

6. Luftfilter nach einem der vorhergehenden Ansprüche, wobei der äußere Faltenbalg (10) und der innere Faltenbalg (20) auf der Rohgasseite mit einem Dichtungselement (52) fehlluftdicht miteinander verbunden sind.

7. Luftfilter nach einem der vorhergehenden Ansprüche, wobei das Filterelement (1) eine formwahrende Schale (60) aufweist mit einer daran angeordneten Dichtungsgeometrie, wobei sich die Dichtungsgeometrie in der von den Einzelzyklonen (140) abgewandten axialen Richtung des Luftfiltergehäuses befindet.

8. Luftfilter nach einem der vorhergehenden Ansprüche, wobei die Faltentiefe des außenliegenden Filterbalges (10) kleiner ist als die Faltentiefe des dazu benachbart radial innen liegenden Filterbalges (20).

9. Luftfilter nach einem der vorhergehenden Ansprüche, wobei ein Einzelzyklon (140) einen Zyklonkanal (143) aufweist, an dessen Einlassende (141) eine Leitblechanordnung (142) vorgesehen ist, die ausgelegt ist, um einströmende Luft in eine Drehbewegung um eine Erstreckungsachse des Zyklonenkanals (143) zu versetzen, und an dessen Auslassende (144) eine konzentrische Auslassanordnung vorgesehen ist mit einem innenliegenden Reinluftauslass (146) und einem außenliegenden Filterpartikelauslass (145).

## Claims

1. Air filter for an internal combustion engine having
an air filter housing (100) with a raw gas chamber (102),
a pre-separator (120) featuring a cyclone arrangement (130) with a plurality of individual cyclones (140) having a discharge path (148) each, wherein the discharge direction of the individual cyclones (140) is directed into the raw gas chamber (102) of the air filter housing,
a filter element inserted into the air filter housing with a radially outer and a radially inner inflow channel, wherein the filter element is designed in the shape of a multiple filter bellows with an outer filter bellows and an inner filter bellows disposed radially thereto and can receive the flow through the outer inflow channel via the outer lateral surface and the inner inflow channel is substantially defined by the raw gas side of the inner bellows (20),
wherein the air flowing through the inner inflow channel flows through the inner lateral surface of the inner bellows,
wherein the air filter housing (100) features a receptacle (101) for the filter element and a raw gas chamber area defined by the air filter housing (100) and by a lateral surface on the raw gas side or by an inflow surface of the inserted filter element,
wherein the receptacle (101) of the air filter housing (100) is designed to accommodate the filter element,
wherein the pre-separator (120) features an air outlet configuration (121), wherein the air outlet configuration corresponds with an inflow surface of the filter element to be inserted in such a way,
that the discharge paths (148) of the pre-separator (120) are distributed on an inflow surface of the inserted filter element in such a way,
that at least one part of the individual cyclones (140) each with their discharge paths (148) are oriented towards the inner inflow channel and one part of the individual cyclones (140) each with their discharge paths (148) towards the outer inflow channel.

2. Air filter according to claim 1, wherein the inner inflow channel extends centrally in the filter element (1).

3. Air filter according to one of the above claims, wherein the two inflow channels are located radially outside and radially inside on the front face of the filter element (1).

4. Air filter according to one of the above claims, wherein the receptacle and the sealing configuration for sealing the filter element against the air filter housing (100) are located on a clean gas side of the air filter housing relative to the filter element (1).

5. Air filter according to one of the above claims, wherein the two opposing sides of the inner bellows (20) are connected with each other by means of a sealing element (51) on the clean gas side.

6. Air filter according to one of the above claims, wherein the outer bellows (10) and the inner bellows (20) are connected with each other on the raw gas side by means of a sealing element (52) in an infiltrated-air-tight manner.

7. Air filter according to one of the above claims, wherein the filter element (1) features a shape-retaining shell (60) with a sealing geometry disposed thereon, wherein the sealing geometry is located in the axial direction of the air filter housing facing away from the individual cyclones (140).

8. Air filter according to one of the above claims, wherein the fold depth of the outer filter bellows (10) is smaller than the fold depth of the adjacent radially inner filter bellows (20).

9. Air filter according to one of the above claims, wherein an individual cyclone (140) features a cyclone conduit (143) at the inlet end (141) of which is provided a baffle arrangement (142) which is designed to cause inflowing air to rotate around an extension axis of the cyclone conduit (143) and at the outlet end (144) of which a concentric outflow arrangement is provided having an inner clean air outlet (146) and an outer filter particle outlet (145).

## Revendications

1. Filtre à air pour un moteur à combustion interne comportant
un boîtier de filtre à air (100) avec un compartiment à gaz brut (102),
un pré-séparateur (120) présentant un ensemble de cyclones (130) avec plusieurs cyclones individuels (140) comportant chacun une trajectoire d'échappement (148), la direction d'échappement des cyclones individuels (140) étant dirigée vers le compartiment à gaz brut (102) du boîtier de filtre à air,
un élément filtrant monté dans le boîtier de filtre à air avec un canal d'afflux extérieur radial et un canal d'afflux intérieur radial, l'élément filtrant étant exécuté sous forme de soufflet de filtre multiple avec un soufflet de filtre extérieur et un soufflet de filtre intérieur disposé de façon radiale par rapport au soufflet de filtre extérieur et pouvant être parcouru à travers le canal d'afflux extérieur via la surface d'enveloppe extérieure et le canal d'afflux intérieur étant essentiellement limité par le côté de gaz brut du soufflet intérieur (20),
l'air affluant à travers le canal d'afflux intérieur passant par la surface d'enveloppe intérieure du soufflet intérieur,
le boîtier de filtre à air (100) présentant un logement (101) pour l'élément filtrant et un compartiment à gaz brut limité par le boîtier de filtre à air (100) et par une surface d'enveloppe du côté de gaz brut ou une surface d'afflux de l'élément filtrant monté,
le logement (101) du boîtier de filtre à air (100) étant conçu pour réceptionner l'élément filtrant,
le pré-séparateur (120) présentant une configuration de sortie d'air (121), la configuration de sortie d'air correspondant avec une surface d'afflux de l'élément filtrant à monter de sorte que
les trajectoires d'échappement (148) du pré-séparateur (120) soient réparties sur une surface d'afflux de l'élément filtrant monté,
qu'au moins une partie des cyclones individuels (140) soit dirigée, avec leurs trajectoires d'échappement (148), sur le canal d'afflux intérieur et qu'une partie des cyclones individuels (140) soit dirigée, avec leurs trajectoires d'échappement (148), sur le canal d'afflux extérieur.

2. Filtre à air selon la revendication 1, le canal d'afflux intérieur étant centré dans l'élément filtrant (1).

3. Filtre à air selon l'une des revendications précédentes, les deux canaux d'afflux extérieur radial et intérieur radial se trouvant sur la face frontale de l'élément filtrant (1).

4. Filtre à air selon l'une des revendications précédentes, le logement et la configuration d'étanchéité assurant l'étanchéité de l'élément filtrant par rapport au boîtier de filtre à air (100) se situant d'un côté de gaz pur du boîtier de filtre à air par rapport à l'élément filtrant (1).

5. Filtre à air selon l'une des revendications précédentes, les deux côtés opposés du soufflet intérieur (20) étant reliés l'un à l'autre par un élément d'étanchéité (51) du côté de gaz pur.

6. Filtre à air selon l'une des revendications précédentes, le soufflet extérieur (10) et le soufflet intérieur (20) étant reliés l'un à l'autre par un élément d'étanchéité (52), du côté de gaz brut, de manière à éviter les fuites d'air.

7. Filtre à air selon l'une des revendications précédentes, l'élément filtrant (1) étant doté d'une coque (60) à la forme stable comportant une géométrie d'étanchéité, la géométrie d'étanchéité étant située dans la direction axiale opposée aux cyclones individuels (140) du boîtier de filtre à air.

8. Filtre à air selon l'une des revendications précédentes, la profondeur des plis du soufflet de filtre extérieur (10) étant inférieure à la profondeur des plis du soufflet de filtre intérieur (20) se trouvant à proximité en sens radial.

9. Filtre à air selon l'une des revendications précédentes, un cyclone individuel (140) présentant un canal de cyclone (143) à l'extrémité d'admission (141) duquel est prévue un ensemble de tôles de guidage (142) conçu pour mettre en rotation l'air affluant autour d'un axe d'extension du canal de cyclone (143) et à l'extrémité de sortie (144) duquel est prévu un ensemble de sortie concentrique avec une sortie d'air pur intérieure (146) et une sortie de particules filtrantes extérieure (145).
